# DEMANDE DE BREVET EUROPEEN

(11) **EP 1 413 224 A1**
(43) Date de publication de la demande: **28.04.2004**
(21) Numéro de dépôt: 02360293.1
(22) Date de dépôt: 22.10.2002
(51) Int. Cl.: A47B 13/02, F16B 12/40, A47B 87/00

(54) **Platine d'assemblage pour mobilier**

(71) Demandeur: Le Teo, Catherine, 77630 St Martin en Biere (FR); Blet, Thierry, 77630 St Martin en Biere (FR)
(72) Inventeur: Le Teo, Catherine, 77630 St Martin en Biere (FR); Blet, Thierry, 77630 St Martin en Biere (FR)
(74) Mandataire: Littolff, Denis

(57) **Abrégé**

La présente invention concerne une platine d'assemblage pour des éléments constitutifs de mobilier, constituée d'au moins une pièce rigide présentant un axe de symétrie (I) dirigé verticalement lorsque la platine présente une orientation compatible avec l'assemblage desdits éléments constitutifs, ladite platine présentant au moins une paroi périphérique s'étendant suivant l'axe de symétrie (I), laquelle comporte au moins deux évidements dirigés vers l'intérieur de la platine en partant de sa périphérie, et ce suivant une direction sensiblement orthogonale à l'axe de symétrie (I), de manière à constituer des logements pour l'engagement d'organes de montage de certains des éléments constitutifs.

## Description

La présente invention se rapporte au domaine technique général du meuble ou du mobilier, notamment intérieur. Dans ce domaine technique, on est souvent confronté d'une part à des phénomènes de mode et d'autre part à des nécessités fonctionnelles qui supposent un remplacement ou un réaménagement assez fréquent du mobilier, en particulier dans des bureaux ou dans des espaces de travail.

Ainsi, lorsqu'un espace de travail est aménagé, il devient difficile de remplacer le mobilier existant par du mobilier neuf de façon fréquente et ce essentiellement pour des raisons de coût. En outre, l'évolution des formes et des modes, font qu'après une certaine période, on risque de ne plus retrouver sur le marché un mobilier complémentaire, qui pourrait être associé au mobilier existant sans altérer l'homogénéité esthétique de l'ensemble.

Par ailleurs, il est souvent nécessaire de modifier ou de moduler l'agencement de mobilier dans un espace de travail, par exemple pour augmenter la capacité d'une salle de réunion ou tout simplement pour installer plus de personnes dans un local. Des solutions évolutives de mobilier ne sont pas très répandues et de toute façon ne sont en général pas compatibles avec le mobilier existant.

Le but de la présente invention vise à pallier aux inconvénients de l'état de la technique et à fournir des moyens techniques capables de conférer à un mobilier des propriétés évolutives et modulaires pour faire face à toute nécessité d'agencement ou d'utilisation dudit mobilier.

Les objectifs assignés à la présente invention sont atteints à l'aide d'une platine d'assemblage pour des éléments constitutifs de mobilier, constituée d'une pièce rigide présentant un axe de symétrie (1) dirigé verticalement lorsque la platine présente une orientation compatible avec l'assemblage desdits éléments constitutifs de mobilier, ladite platine présentant au moins une paroi périphérique s'étendant suivant l'axe de symétrie (1), laquelle comporte au moins trois évidements s'étendant vers l'intérieur de la platine en partant de sa périphérie, et ce suivant une direction sensiblement orthogonale à l'axe de symétrie (1) de manière à constituer des logements pour des organes de montage de certains éléments constitutifs de mobilier.

La platine d'assemblage comporte en outre des moyens de fixation complémentaires pour sa fixation axiale sur un élément constitutif de mobilier additionnel.

Les éléments constitutifs de mobilier comprennent par exemple des pieds destinés à se loger dans lesdits logements, et un plateau auquel la platine peut se fixer selon une direction axiale, et le cas échéant tout autre support.

Selon un exemple de réalisation, la platine d'assemblage comporte des moyens de fixation complémentaires comprenant un épaulement ou un collet périphérique pourvu d'un filetage. La platine d'assemblage peut alors être vissée sous un plateau (par exemple de table) soit directement soit par l'intermédiaire d'une pièce de liaison.

La platine d'assemblage est par exemple constituée de deux demi-coques, solidarisées à l'aide de vis d'assemblage. Ces dernières peuvent aussi servir de moyens de retenue pour maintenir les organes de montage dans leurs logements.

Chaque logement est traversé par au moins une vis d'assemblage, laquelle traverse sensiblement perpendiculairement ledit logement pour constituer un moyen de retenue. On obtient alors un assemblage simple et fiable.

Selon un exemple de réalisation, la platine d'assemblage présente un puits central traversant, délimité par une paroi cylindrique dont les extrémités constituent des parties cylindriques saillantes sur chaque demi-coque respective.

Les parties saillantes présentent une forme en créneaux, de manière à délimiter des passages pour des câbles.

Selon un exemple de réalisation, la paroi périphérique de la platine d'assemblage présente, en section transversale à l'axe de symétrie , une forme polygonale, par exemple rectangulaire ou carrée.

Selon un exemple de réalisation, au moins trois faces de la paroi présentent chacune au moins un logement.

Selon un autre exemple de réalisation, la paroi périphérique présente, en section transversale à l'axe de symétrie (1), une forme circulaire.

Les logements s'étendent alors de façon radiale dans la platine. Les logements sont par exemple espacés angulairement entre eux de 45°.

Selon un exemple de réalisation, la platine d'assemblage est associée à un couvercle comportant des moyens de montage sur le puits central, ledit couvercle permettant de recouvrir au moins la partie centrale de la platine d'assemblage. Le couvercle est réalisé en un matériau souple, du type élastomère, et comporte des renforts radiaux, à de fins de rigidification.

La présente invention concerne également un mobilier comprenant au moins une platine d'assemblage telle que définie précédemment, au moins un plateau comportant des moyens de fixation de la platine d'assemblage et au moins trois éléments constitutifs réalisant des pieds destinés à supporter ledit plateau.

Selon un mode de réalisation, le plateau présente un passage circulaire dont le chant interne est pourvu d'un taraudage destiné à coopérer avec le filetage de l'épaulement périphérique de la platine d'assemblage et à réaliser ainsi les moyens de fixation de ladite platine. Chaque pied présente avantageusement une forme coudée, dont une première branche constitue l'organe de montage, susceptible de subir un mouvement de rotation dans son logement, et dont une seconde branche, orientée sensiblement à 90° avec la première branche, est destinée à reposer sur le sol avec son extrémité libre dans au moins une des positions ou orientations possibles du pied.

Avantageusement, chaque logement et chaque organe de montage comporte des moyens de blocage, complémentaires entre eux, et susceptibles de bloquer en rotation ledit organe de montage, notamment dans deux positions angulaires fixes correspondant respectivement à une extension parallèle et orthogonale à l'axe de symétrie (1) de la seconde branche.

D'autres caractéristiques et avantages ressortiront également de la description détaillée figurant ci-après, en référence aux dessins annexés à titre d'exemples non limitatifs dans lesquels :
- la figure 1 est un exemple de réalisation de la platine d'assemblage conforme à l'invention,
- la figure 2 est une vue de dessus d'un exemple de réalisation de la platine d'assemblage conforme à l'invention,
- la figure 3 est une vue en section selon la ligne III-III de la figure 2,
- la figure 4 est une vue schématique d'un autre exemple de réalisation de la platine d'assemblage conforme à l'invention,
- les figures 5 et 6 sont des exemples de montage de la platine d'assemblage conforme à l'invention dans un mobilier,
- la figure 7 est un autre exemple d'utilisation d'une platine d'assemblage conforme à l'invention montrée en perspective,
- les figures 8 et 9 sont des détails d'éléments constitutifs de mobilier avec lesquels est utilisée au moins une platine d'assemblage conforme à l'invention,
- la figure 10 est un exemple d'agencement de mobilier grâce à des platines d'assemblage conformes à l'invention,
- la figure 11 est un autre exemple d'agencement de mobilier conforme à l'invention,
- la figure 12 est un détail de l'agencement de mobilier de la figure 11.

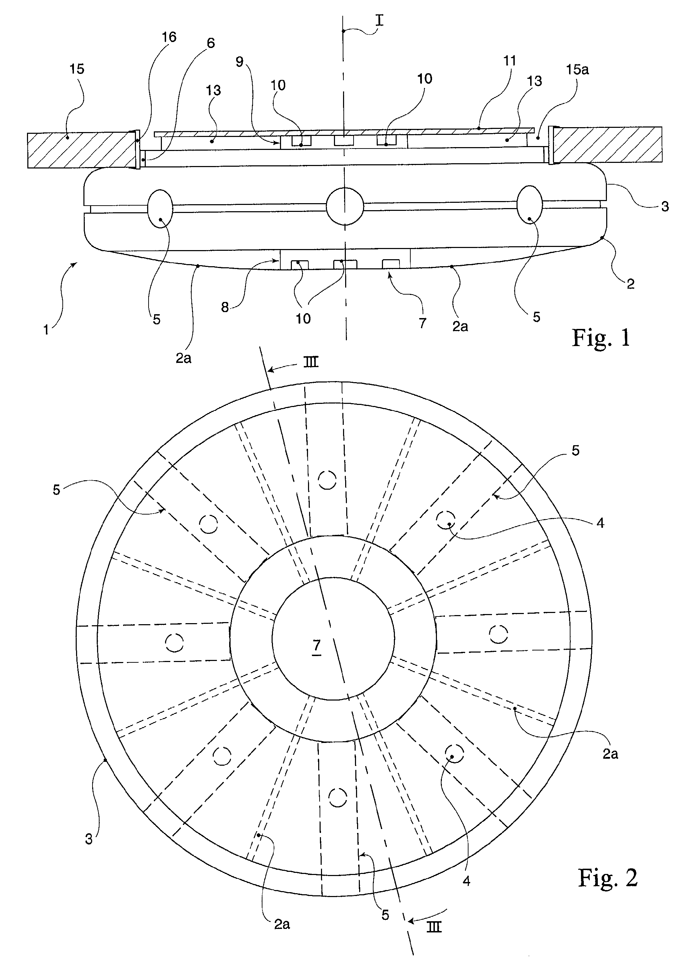

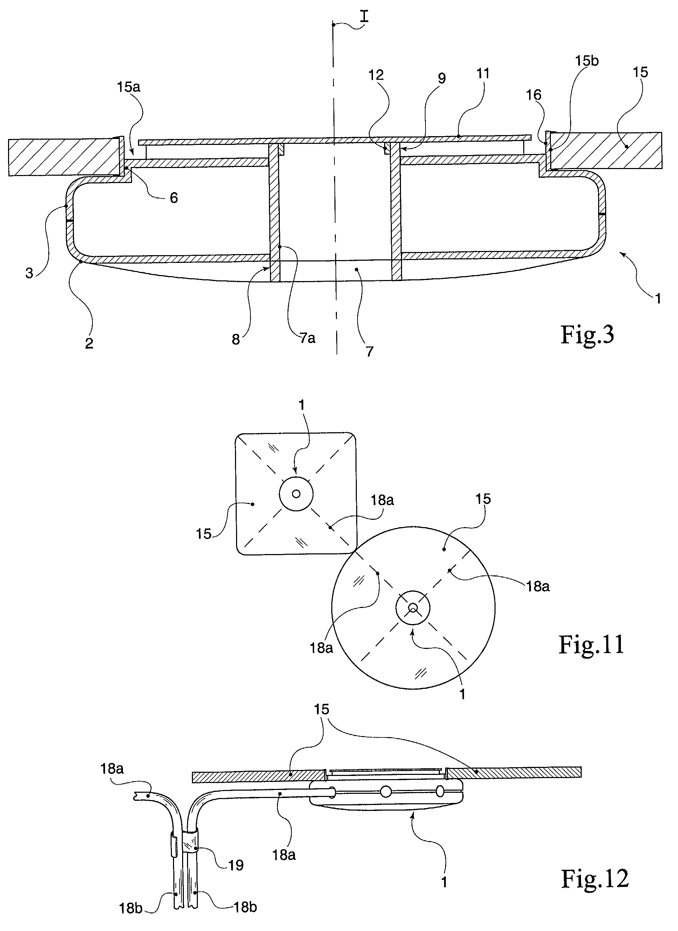

La figure 1 montre une vue générale d'un exemple de réalisation d'une platine d'assemblage 1 conforme à l'invention. Cette platine d'assemblage 1 est également représentée en section à la figure 3 et en vue de dessus à la figure 2. Elle est constituée de deux demi-coques, inférieure 2 et supérieure 3, solidarisées par exemple à l'aide de vis (non représentées). Des passages 4 sont ménagés à travers les demi-coques 2 et 3 afin d'y loger les vis de solidarisation. La platine d'assemblage 1 comporte également des évidements dirigés vers l'intérieur de la platine en partant de sa périphérie, et ce suivant une direction sensiblement orthogonale à l'axe de symétrie I de ladite platine. Ces évidements constituent ainsi des logements 5 pour l'engagement d'organes de montage de certains éléments constitutifs de mobilier. Ces logements 5 sont par exemple obtenus par moulage. La section transversale de ces logements 5 peut être circulaire ou autre.

La platine d'assemblage 1 présente également dans sa partie supérieure un épaulement 6 pourvu d'un filetage sur sa périphérie externe. Cet épaulement 6 présente un diamètre plus faible que celui de la demi coque supérieure 3. L'épaulement 6 peut avantageusement être remplacé par un collet périphérique obtenu par moulage et constituant une partie saillante sur la demi-coque supérieure 3. Pour des raisons de clarté, l'épaulement 6 n'est pas représenté sur la figure 2. Cet épaulement 6 constitue donc une partie des moyens de fixation complémentaires pour la fixation de la platine d'assemblage 1 sur un élément constitutif de mobilier additionnel, par exemple un plan de travail. La platine d'assemblage 1 présente également un puits central 7 la traversant de part et d'autre, délimitée par une paroi cylindrique dont les extrémités constituent des parties saillantes 8, 9 sur chacune des demi-coques 2, 3 respectives. Ces dernières, et en particulier la demi-coque inférieure 2, présentent des nervures 2a obtenues par moulage et destinées à la rigidification et à la solidité de la platine d'assemblage 1.

Les parties saillantes 8, 9 présentent par exemple une forme en créneaux de manière à réaliser et à délimiter des passages 10 pour des câbles électriques. La partie saillante inférieure 8 peut être obturée à l'aide d'un bouchon.

Les logements 5 s'étendent de façon radiale dans la platine d'assemblage 1 comme cela est représenté par exemple à la figure 2. Les logements 5 sont espacés angulairement entre eux de 45° et leur nombre peut être choisi en fonction de l'utilisation prévue pour la platine d'assemblage, au moment de la fabrication de ladite platine. Selon d'autres variantes d'exécution, toute autre orientation ou répartition des logements 5 peut être envisagée. Leur répartition irrégulière peut être liée à l'utilisation d'un élément (ou plan de travail) de forme particulière, à supporter. La platine d'assemblage 1 est également associée à un couvercle 11 comportant des moyens de montage 12 sur le puit central 7. Ce couvercle 11 permet de recouvrir au moins la partie centrale de la platine d'assemblage 1. Le couvercle 11 est réalisé en un matériau souple du type élastomère et comporte avantageusement des renforts radiaux 13 (voir figure 1) à des fins de rigidification dudit couvercle. Ces renforts 13 sont par exemple des nervures obtenues par moulage et présentent l'avantage de conférer une rigidité suffisante à l'ensemble du couvercle 11 sans toutefois nuire à l'élasticité de la périphérie dudit couvercle 11. Ils permettent de plus localement le passage de câbles électriques, lesquels traversent le puits central 7 et ressortent par les passages 10.

Les moyens de montage 12 sont par exemple réalisés à l'aide de plots ou d'un collet annulaire dont le diamètre et l'élasticité permettent un engagement dans le puits central 7.

La fixation du couvercle 11 sur le puits central 7 peut aussi être assurée directement par les extrémités intérieures des renforts 13.

Les moyens de fixation complémentaires (vissage) permettent par exemple de fixer la platine d'assemblage 1 sous un plateau 15, par exemple un plateau de table. Ce dernier présente une ouverture circulaire 15a dont le chant interne 15b est pourvu d'un taraudage destiné à coopérer avec le filetage de l'épaulement 6 de la platine d'assemblage 1. Cette dernière est ainsi vissée sous le plateau 15 et la partie correspondant à l'épaulement 6 vient s'engager dans l'ouverture 15a.

Avantageusement, l'ouverture circulaire 15a est pourvue d'une bague cylindrique 16 rapportée, présentant un taraudage destiné à coopérer avec le filetage de l'épaulement 6.

D'autres moyens de fixation ou de montage de la platine d'assemblage 1 peuvent également être envisagés. Il est ainsi possible d'utiliser une fixation par clipsage ou par un système du type baïonnettes. Un tel système suppose également d'effectuer un mouvement de rotation, par exemple d'un 1/4 de tour, du plateau 15 pour obtenir une liaison mécanique intime et stable avec la platine d'assemblage 1. On peut également disposer d'un plateau 15 présentant une ouverture rectangulaire ou carrée 15c dans laquelle vient s'engager une pièce intermédiaire 17 de forme extérieure complémentaire. C'est alors sur un orifice annulaire intérieur de cette pièce intermédiaire 17 qu'est fixée la platine d'assemblage 1 de la manière décrite précédemment.

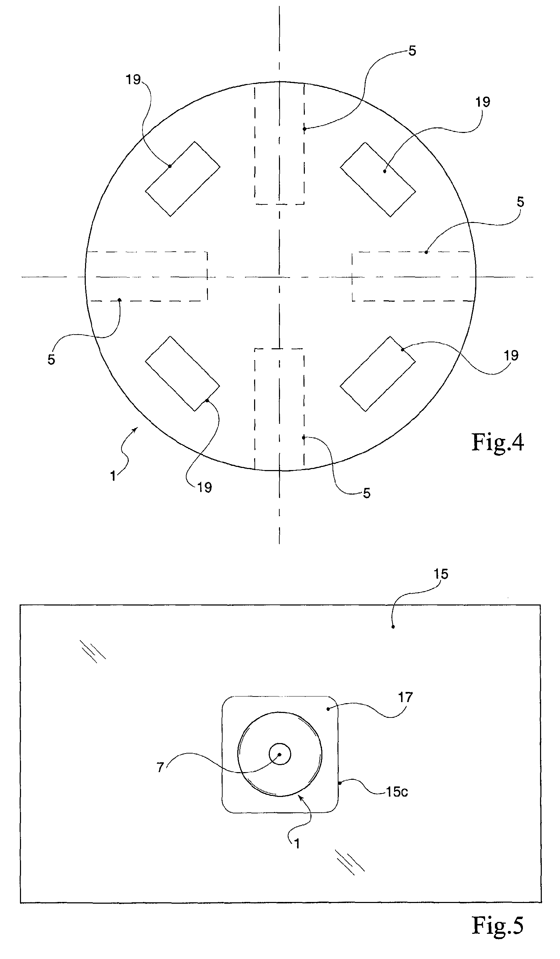

On peut se reporter à la figure 5. C'est alors la pièce intermédiaire 17, fixée par tous moyens sur le plateau 15, qui est pourvue d'une bague cylindrique (16) présentant le taraudage destiné à coopérer avec le filetage de l'épaulement 6.

Selon un autre exemple de réalisation de la platine d'assemblage 1, sa paroi périphérique présente, en section transversale à l'axe de symétrie I, une forme polygonale par exemple rectangulaire ou carrée. Dans un tel cas de figure, la platine d'assemblage 1 est directement montée dans une ouverture de forme complémentaire et la pièce intermédiaire 17 est supprimée. Ce sont alors au moins deux parties de paroi de la platine d'assemblage 1 qui présentent chacune au moins un logement 5. Préférentiellement au moins trois parties de paroi présente au moins un logement 5.

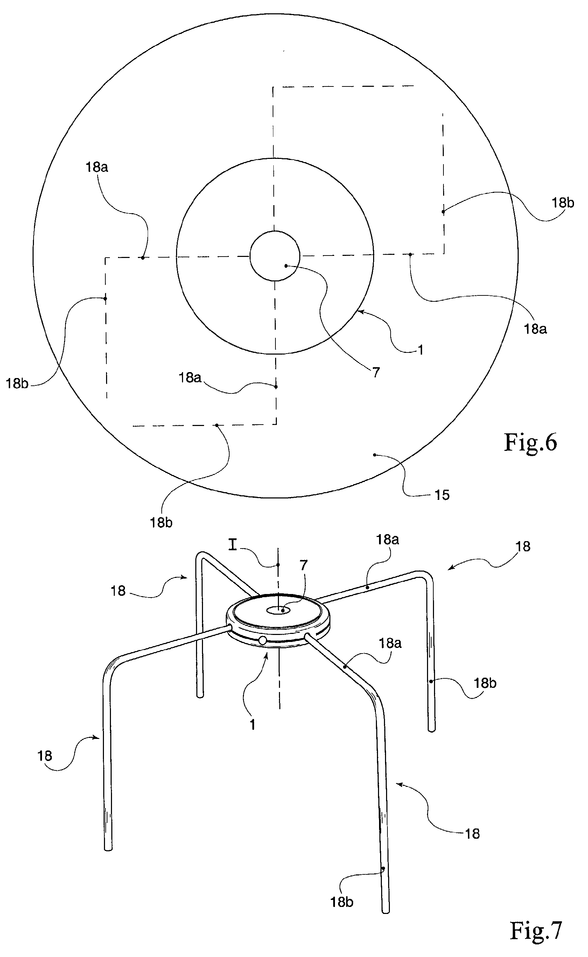

La platine d'assemblage 1 comporte également des moyens de retenue pour maintenir les organes de montage dans leur logement 5 correspondant. Ces organes de montage sont par exemple des parties de pieds 18 destinés à soutenir le plateau 15. On pourra par exemple se reporter à la figure 7 montrant une platine d'assemblage 1 et quatre pieds 18 avant le montage dudit sous-ensemble sous le plateau 15. A la figure 7 ce sont ainsi quatre pieds 18 qui sont engagés dans les logements 5 correspondants de la platine d'assemblage 1.

Chaque pied 18 présente une forme coudée dont une première branche 18a constitue l'organe de montage, lequel est susceptible de subir un mouvement de rotation dans son logement 5, et dont une seconde branche 18b est orientée sensiblement à 90° avec la première branche 18a pour reposer sur le sol avec son extrémité libre dans au moins une des orientations ou positions possibles dudit pied 18 par rapport à la platine d'assemblage 1. La seconde branche 18b peut par exemple se terminer par deux extrémités espacées l'une de l'autre, de manière à constituer deux points d'appui au sol. Deux pieds 18 suffisent alors pour supporter de façon stable le plateau 15.

Chaque première branche 18a peut ainsi à titre d'exemple être pourvue d'ergots escamotables élastiquement, de manière à s'effacer lors de l'engagement de ladite première branche 18a dans son logement 5 et ensuite venir en saillie extérieure pour se loger dans une cavité correspondante prévue dans la platine d'assemblage 1, lorsque la branche 18a est correctement et suffisamment engagée dans son logement 5 d'une part, et convenablement orientée dans ledit logement 5 d'autre part. On obtient ainsi, par exemple dans la configuration représentée à la figure 7, une platine d'assemblage 1 comportant des moyens de retenue pour maintenir les organes de montage dans leur logement 5 et ce dans une orientation optimale et fonctionnelle.

Selon un autre mode de réalisation, on peut prévoir des évidements dans les premières branches 18a qui viendront coopérer, une fois correctement engagés dans leurs logements 5, avec des protubérances faisant saillie à l'intérieur desdits logements 5. Ces protubérances sont facilement réalisables par moulage.

Les pieds 18 et par conséquent les branches 18a et 18b sont par exemple réalisés à l'aide d'un tube coudé. On peut alors aussi y réaliser un perçage, non représenté, lequel est traversé par une vis de solidarisation traversant les passages 4 ménagés de façon adéquate sur les demi -coques supérieure 3 et inférieure 2. Ces passages 4 sont donc localisés et centrés sur les logements 5. Chacun des logements 5 est ainsi traversé par au moins une vis d'assemblage, laquelle traverse donc sensiblement perpendiculairement ledit logement 5, pour constituer le moyen de retenue de la première branche 18a. Ainsi, tant que la vis d'assemblage des deux demi-coques supérieure et inférieure 3 et 2 n'est pas retirée, il est impossible d'extraire la branche 18a de son logement 5 correspondant. La première branche 18a est également bloquée en rotation. Il est intéressant de noter que les premières branches 18a peuvent présenter des longueurs variables de manière à répartir de façon optimale les points d'appui au sol sous le plateau 15. Toute configuration est ainsi envisageable.

Dans un autre exemple de réalisation conforme à l'invention et représenté par exemple à la figure 4, la platine d'assemblage 1 comporte des passages traversant 19 répartis entre les logements 5. Ces passages traversant 19 permettent par exemple aux câbles électriques de traverser le plateau 15 et réaliser des branchements électriques sur ledit plateau 15. Dans un tel exemple de réalisation, on peut envisager de supprimer le puits central 7. Tout autre moyen de fixation du couvercle 11 peut alors être prévu.

Les câbles électriques sont agencés sous le plateau 15 et sont par exemple fixés ou accrochés à un pied 18 pour venir s'engager à travers des passages 10 dans le puit central 7, déboucher ensuite par d'autres passages de câbles 10 prévus dans la partie saillante supérieure 9 et s'étendre sous le couvercle 11 pour déboucher sur le plateau 15 par une zone au voisinage du chant 15b et de l'extrémité périphérique du couvercle 11. La flexibilité dudit couvercle 11 et un écart d'environ 5 mm entre le chant 15b et la périphérie du couvercle 11 favorisent alors l'émergence du câble électrique.

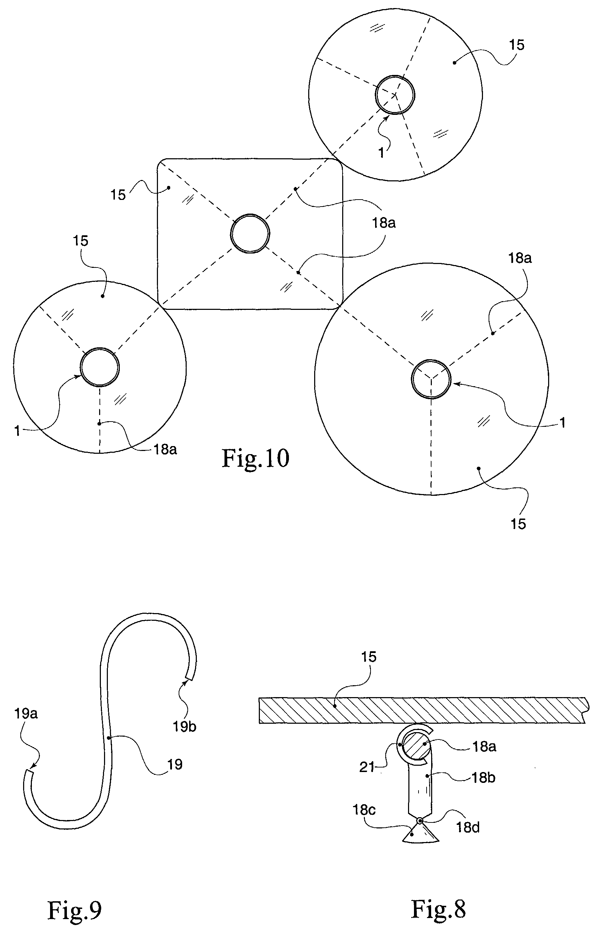

Les mobiliers selon l'invention peuvent être fixés les uns aux autres à l'aide de clips élastiques 19 dont un exemple de réalisation est représenté à la figure 9. Le clip élastique 19 présente une forme générale en S, dont une première boucle 19a entoure élastiquement une branche 18b, et y est installée par coulissement, et dont une seconde boucle 19b est susceptible de se déformer élastiquement afin de s'engager sur une autre branche 18b. Le clip élastique 19 est par exemple obtenu par extrusion.

Ainsi en se reportant à la figure 11 et à la figure 12, il est possible d'obtenir un agencement particulier de mobilier. En effet, chaque pied 18 peut être pourvu de clips élastiques 19, qui permettent de solidariser ledit pied à un pied 18 adjacent. On obtient ainsi un ensemble plus ou moins complexe de mobilier, sans toutefois nuire à la cohésion et à la stabilité mécanique de l'ensemble.

Selon un exemple de réalisation représenté à la figure 6, la platine d'assemblage 1 est circulaire et fixée sous un plateau 15 également circulaire. Les premières branches 18a sont engagées dans des logements 5 correspondants de la platine d'assemblage 1 et sont susceptibles de pivoter dans lesdits logements 5. Il est ainsi possible, par exemple à des fins de transport, de faire pivoter chacun des pieds 18 de manière à ce que les premières et les secondes branches, respectivement 18a et 18b, s'étendent dans un plan parallèle et rapproché au plan d'extension du plateau 15. Il suffit ensuite pour monter de façon complète le mobilier, de pivoter les pieds 18 de manière à orienter les secondes branches 18b parallèlement à l'axe de symétrie I, lequel est orthogonal au plateau 15. L'encombrement de ce mobilier pour son transport est ainsi réduit. Le montage complet ne nécessite que très peu de temps ou de main d'oeuvre.

Avantageusement des moyens de blocage, complémentaires entre eux, et susceptibles de bloquer en rotation les branches 18a notamment dans deux positions angulaires fixes correspondant respectivement à une extension parallèle et orthogonale à l'axe de symétrie I de la seconde branche 18b sont ainsi prévues sur la platine d'assemblage 1 et constituent un avantage technique non négligeable. Les longueurs des premières branches 18a sont en général choisies de manière à ce que les pieds 18 ne dépassent pas de l'emprise délimitée périphériquement par le plateau 15.

Il est également possible comme cela est représenté à la figure 8 de prévoir des crochets de blocage 21 ou équivalent sous le plateau 15. Il est ainsi possible en se reportant par exemple à l'exemple de mobilier représenté à la figure 6, de monter au préalable les pieds 18 dans la platine d'assemblage 1, d'orienter sensiblement les secondes branches 18b parallèlement à l'axe de symétrie 1 et de visser ensuite la platine d'assemblage 1 dans l'ouverture 15a du plateau 15. La rotation de la platine d'assemblage 1 correspondant à son vissage et à sa fixation sous le plateau 15 s'effectue jusqu'à une position d'arrêt délimitée par les crochets de blocage 21 dans lesquels viennent s'engager les premières branches 18a s'étendant horizontalement. Ces crochets de blocage 21 sont par exemple semi-rigides de manière à obtenir par clipsage une bonne solidarisation avec les premières branches 18a et par conséquent une solidarisation mécanique de l'ensemble du mobilier, constitué du plateau 15, des pieds 18 et de la platine d'assemblage 1. Le nombre de crochets de blocage 21 est choisi en fonction des dimensions des premières branches 18a. Chaque pied 18 peut également être pourvu d'une embase 18c reposant sur le sol et relié à la seconde branche 18b via une articulation 18d.

La figure 10 représente un exemple d'agencement de mobilier incorporant des platines d'assemblage 1. Toute configuration est envisageable sans sortir du cadre de la présente invention, comme le montre également la figure 11 commentée précédemment.

Les clips élastiques 19, lorsque les pieds 18 sont disposés de façon à ce que certains d'entre eux sont juxtaposés (cf. figure 12), permettent une grande souplesse dans l'agencement. On obtient alors un ensemble de mobilier stable, avec un assemblage de mobiliers élémentaires reliés entre eux.

Les dimensions des logements 5, en l'occurrence leur diamètre, pour des formes cylindriques sont choisies de façon large. Il est en effet nécessaire de concevoir des pieds 18 tubulaires dont le diamètre dépend de la taille et/ou du poids du plateau à soutenir. Si les logements 5 sont suffisamment grands (diamètre), on pourra utiliser la platine d'assemblage 1 pour y engager des pieds de diamètre bien inférieur à celui des logements 5, en insérant sur les premières branches 18a des manchons d'adaptation pour compenser cet écart de diamètre.

Il peut également être prévu un bouchon refermant le puit central 7 et plus précisément sa partie saillante inférieure 8. Les câbles électriques peuvent alors être disposés de façon horizontale le long des premières branches 18a,et ce de manière très rapprochée.

L'orifice supérieur du puits central 7 peut aussi recevoir un insert réalisant un support de lampe ou de tube, lui-même apte à supporter d'autres accessoires. De même, les clips en S peuvent servir à fixer des pieds de lampadaires tubulaires, de même diamètre que celui desdits pieds.

## Revendications

1. Platine d'assemblage (1) pour des éléments constitutifs de mobilier, constituée d'au moins une pièce rigide présentant un axe de symétrie (1) dirigé verticalement lorsque la platine présente une orientation compatible avec l'assemblage desdits éléments constitutifs, ladite platine présentant au moins une paroi périphérique s'étendant suivant l'axe de symétrie (1), laquelle comporte au moins trois évidements dirigés vers l'intérieur de la platine en partant de sa périphérie, et ce suivant une direction sensiblement orthogonale à l'axe de symétrie (1), de manière à constituer des logements (5) pour l'engagement d'organes de montage de certains des éléments constitutifs.

2. Platine d'assemblage (1) selon la revendication 1, **caractérisée en ce qu'**elle comporte en outre des moyens de fixation axiale complémentaires pour sa fixation sur un élément constitutif de mobilier additionnel.

3. Platine d'assemblage (1) selon la revendication 2, **caractérisée en ce que** les moyens de fixation axiale complémentaires comprennent un épaulement (6) ou un collet périphérique pourvu d'un filetage.

4. Platine d'assemblage (1) selon l'une quelconque des revendications 1 à 3, **caractérisée en ce qu'**elle est constituée de deux demi-coques (2, 3), solidarisées à l'aide de vis d'assemblage.

5. Platine d'assemblage (1) selon l'une quelconque des revendications 1 à 4 **caractérisée en ce qu'**elle comporte des moyens de retenue pour maintenir les organes de montage dans leurs logements (5).

6. Platine d'assemblage (1) selon la revendication 5, **caractérisée en ce que** chaque logement (5) est traversé par au moins une vis d'assemblage, laquelle traverse sensiblement perpendiculairement ledit logement (5) pour constituer un moyen de retenue.

7. Platine d'assemblage (1) selon l'une quelconque des revendications 1 à 6, **caractérisée en ce qu'**elle présente un puits central (7) traversant, délimité par une paroi cylindrique dont les extrémités constituent des parties saillantes (8, 9) sur chaque demi-coque (2, 3) respective.

8. Platine d'assemblage (1) selon la revendication 7, **caractérisée en ce que** les parties saillantes (8, 9) présentent une forme en créneaux, de manière à délimiter des passages (10) pour des câbles électriques.

9. Platine d'assemblage (1) selon l'une quelconque des revendications 1 à 8, **caractérisée en ce que** la paroi périphérique présente en section transversale à l'axe de symétrie (1), une forme polygonale, par exemple rectangulaire ou carrée.

10. Platine d'assemblage (1) selon l'une quelconque des revendications 1 à 8, **caractérisée en ce que** la paroi périphérique présente en section transversale à l'axe de symétrie (1), une forme circulaire.

11. Platine d'assemblage (1), selon la revendication 9, **caractérisée en ce qu'**au moins trois parties de paroi présentent chacune au moins un logement (5).

12. Platine d'assemblage (1) selon la revendications 10, **caractérisée en ce que** les logements (5) s'étendent de façon radiale dans ladite platine (1).

13. Platine d'assemblage (1) selon la revendication 12, **caractérisé en ce que** les logements (5) sont espacés angulairement entre eux de 45°.

14. Platine d'assemblage (1) selon l'une quelconque des revendications 1 à 13 **caractérisée en ce qu'**elle est associée à un couvercle (11) comportant des moyens de montage (12) sur le puits central (7), ledit couvercle (11) permettant de recouvrir au moins la partie centrale de ladite platine d'assemblage (1).

15. Platine d'assemblage (1) selon la revendication 14, **caractérisée en ce que** le couvercle (11) est réalisé en un matériau souple du type élastomère, et comporte des renforts radiaux (13), à des fins de rigidification.

16. Platine d'assemblage (1) selon la revendication 15, **caractérisée en ce que** les renforts radiaux (13) prennent la forme de nervures utilisées pour la fixation au puits central (7).

17. Mobilier comprenant :
- au moins une platine d'assemblage (1) conforme à l'une quelconque des revendications 1 à 16,
- au moins un plateau (15) comportant des moyens de fixation de la platine d'assemblage (1),
- et au moins trois éléments constitutifs réalisant des pieds (18) destinés à supporter le plateau (15).

18. Mobilier selon a revendication 17 et la revendication 3, **caractérisé en ce que** le plateau (15) présente un passage circulaire (15a) dont le chant interne (15b) est pourvu d'un taraudage destiné à coopérer avec le filetage de l'épaulement périphérique (6) de la platine d'assemblage (1) et réaliser ainsi les moyens de fixation de ladite platine.

19. Mobilier selon a revendication 18, caractérisé en ce le taraudage équipe la paroi interne annulaire d'une pièce intermédiaire (16) interposée entre le plateau (15) et la platine (1).

20. Mobilier selon la revendication 17, **caractérisé en ce que** chaque pied (18) présente une forme coudée, dont la première branche (18a) constitue l'organe de montage, lequel est susceptible de subir un mouvement de rotation dans son logement (5), la seconde branche (18b) étant orientée sensiblement à 90° avec la première branche (18a) pour reposer sur le sol avec son extrémité libre, dans au moins une des positions ou orientations possibles du pied (18) par rapport à la platine d'assemblage (1).

21. Mobilier selon la revendication précédente, **caractérisé en ce que** chaque logement (5) et chaque organe de montage comportent des moyens de blocage complémentaires entre eux, susceptibles de bloquer en rotation la première branche (18a), notamment dans deux positions angulaires fixes, correspondant respectivement à une extension parallèle et orthogonale à l'axe de symétrie (1) de la seconde branche (18b).

22. Mobilier selon la revendication précédente, **caractérisé en ce que** l'extrémité des branches (18a) des pieds (18) formant organe de montage est dotée d'un évidement prévu pour coopérer avec au moins une protubérance faisant saillie dans le logement (5) au niveau d'une position angulaire fixe.

23. Platine d'assemblage (1) selon la revendication 1, **caractérisée en ce qu'**elle comprend des manchons, insérés dans les logements (5) de manière à diminuer les dimensions de ces derniers pour les adapter au diamètre de pieds (18) tubulaires.

24. Mobilier selon l'une des revendications 17 à 22 et la revendication 23, **caractérisé en ce qu'**il comprend un jeu de manchons de différentes dimensions, susceptibles d'être insérés dans les logements (5), le choix des dimensions étant déterminé par les dimensions des organes de montage.

25. Mobilier selon l'une des revendications 17 à 24,**caractérisé en ce qu'**il comporte des moyens additionnels pour fixer le plateau (15) aux pieds en fin de vissage sur la platine (1).

26. Mobilier selon la revendication précédente, **caractérisé en ce que** lesdits moyens consistent en des crochets de blocage (21) disposés sous le plateau (15), dans lesquels viennent s'engager les pieds (18) tubulaires.
